# EUROPEAN PATENT APPLICATION

(11) **EP 4 503 764 A1**
(43) Date of publication of application: **05.02.2025**
(21) Application number: 23779227.0
(22) Date of filing: 03.03.2023
(51) Int. Cl.: H04W 52/02, H04W 72/0453, H04W 84/12

(54) **COMMUNICATION DEVICE, COMMUNICATION METHOD, AND PROGRAM**

(30) Priority: 28.03.2022 JP 2022052633
(71) Applicant: CANON KABUSHIKI KAISHA, Tokyo 146-8501 (JP)
(72) Inventor: INOHIZA Hirohiko, Tokyo 146-8501 (JP)
(74) Representative: Canon Europe Limited
(86) International application number: PCT/JP2023/007951
(87) International publication number: WO 2023/189198

(57) **Abstract**

A communication apparatus participating in a wireless network built by another first communication apparatus receives a Trigger frame from the other first communication apparatus in an Awake state of the communication apparatus. The Trigger frame permits sharing of a first period, which is at least part of transmission opportunity (TXOP) acquired by the other first communication apparatus, with at least one communication apparatus participating in the wireless network for communication and conforms to IEEE 802.11 series standard. The communication apparatus makes a transition from the Awake state to a Power save state during the first period if the communication apparatus is not permitted to share the first period in the received Trigger frame.

## Description

### Technical Field

The present invention relates to a wireless communication technology.

### Background Art

Specifications for wireless local area network (LAN) technologies are developed by IEEE 802.11, which is a standardizing body of the wireless LAN technologies. The specifications for the wireless LAN technologies include, for example, IEEE 802.11/a/b/g/n/ac/ax. Here, IEEE is an abbreviation of Institute of Electrical and Electronics Engineers.

In IEEE 802.11ax described in PTL 1, improvement of a communication speed in a congestion situation is realized, in addition to high throughput of up to 9.6 gigabits per second (Gbps), due to OFDMA. OFDMA is an abbreviation of Orthogonal Frequency-Division Multiple Access.

In order for further improvement of the throughput, a task group that develops a standard of IEEE 802.11be has been established as a subsequent standard of IEEE 802.11ax.

As a subsequent standard intended to further improve the throughput, improve the efficiency of frequency usage, and improve communication latency, a task group called IEEE 802.11be have been established.

In the IEEE 802.11be standard, for example, multi-link communication is considered, in which one access point (AP) establishes multiple links with one station (STA) via different multiple frequency channels to concurrently perform communication.

In addition, in the IEEE 802.11be, Triggered TXOP sharing is proposed, in which part of the TXOP ensured by the AP is shared with the STA participating in a network using a Trigger frame. Here, TXOP is an abbreviation of transmission oppotunity. Sharing the TXOP acquired by the AP with the STA specified by the AP and inhibiting transmission of a frame to the STA that is not specified during the shared TXOP enable useless transmission frame collision to be avoided to efficiently perform the communication.

### Citation List

### Patent Literature

PTL 1: Japanese Patent Laid-Open No. 2018-50133

### Summary of Invention

### Technical Problem

As described above, the method of sharing the TXOP acquired by the AP with the STA that is specified to realize the improvement of the communication efficiency is considered. However, no definition concerning the behavior of the STA with which the TXOP is not shared is provided.

It is an object of the present invention to realize both communication efficiency and suppression of power consumption in the communication in which the TXOP acquired by the AP is shared with the STA that is specified. Solution to Problem

In order to resolve the above problem, the present invention provides a communication apparatus participating in a wireless network built by another first communication apparatus. The communication apparatus includes first receiving means receiving a Trigger frame from the other first communication apparatus in an Awake state of the communication apparatus. The Trigger frame permits sharing of a first period, which is at least part of transmission opportunity (TXOP) acquired by the other first communication apparatus, with at least one communication apparatus participating in the wireless network for communication and conforms to IEEE 802.11 series standard. The communication apparatus includes control means causing the communication apparatus to make a transition from the Awake state to a Power save state during the first period if the communication apparatus is not permitted to share the first period in the Trigger frame received by the first receiving means.

The present invention provides a communication apparatus playing a role of building a wireless network. The communication apparatus includes transmitting means transmitting a Trigger frame to another communication apparatus participating in the wireless network built by the communication apparatus. The Trigger frame permits sharing of a first period, which is at least part of transmission opportunity (TXOP) acquired by the communication apparatus, with at least one communication apparatus participating in the wireless network for communication and conforms to IEEE 802.11 series standard. Information indicating whether a communication apparatus that is not permitted to share the first period in the Trigger frame makes a transition to a Power save state is included in the Trigger frame.

### Brief Description of Drawings

[Fig. 1] Fig. 1 is a diagram illustrating an example of the configuration of a network built by a communication apparatus 101.
[Fig. 2] Fig. 2 is a diagram illustrating the hardware configuration of communication apparatuses 101 to 104.
[Fig. 3] Fig. 3 is a diagram illustrating an example of the functional configuration of the communication apparatuses 102 to 104.
[Fig. 4] Fig. 4 is a sequence diagram indicating an example of communication through Triggered TXOP sharing in a first embodiment.
[Fig. 5] Fig. 5 is a flowchart describing the operation of an STA in the first embodiment.
[Fig. 6] Fig. 6 is a diagram illustrating the frame format of a Trigger frame in a second embodiment.
[Fig. 7] Fig. 7 is a flowchart describing the operation of an AP in the second embodiment.
[Fig. 8] Fig. 8 is a flowchart describing the operation of the STA in the second embodiment.

### Description of Embodiments

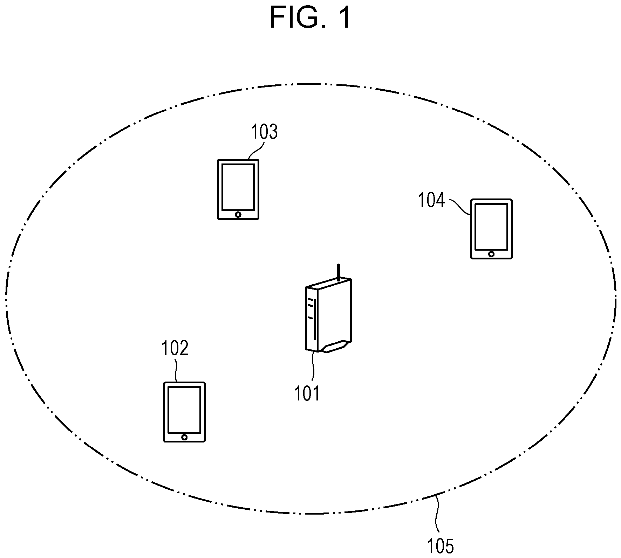

Fig. 1 is a diagram illustrating an example of the configuration of a network according to the present embodiment. A communication apparatus 101 is capable communication with communication apparatuses 102, 103, and 104. The communication apparatus 101 is an access point (AP) having a role of building a wireless network 105. The communication apparatuses 102, 103, and 104 are stations (STAs) having a role of participating in the wireless network 105.

Each of the communication apparatuses 101 to 104 is capable of performing wireless communication conforming to IEEE 802.11be standard. IEEE is an abbreviation of Institute of Electrical and Electronics Engineers. The communication apparatuses 101 to 104 are capable of communication in frequency bands of a 2.4 GHz band, a 5-GHz band, and a 6-GHz band. In addition, the communication apparatuses 101 to 104 are capable of communication using band widths of 20 MHz, 40 MHz, 80 MHz, 160 MHz, and 320 MHz.

The communication apparatuses 101 to 104 are capable of realizing multi-user (MU) communication in which signals from multiple users are multiplexed by performing OFDMA communication conforming to the IEEE 802.11be standard. OFDMA is an abbreviation of Orthogonal Frequency Division Multiple Access. In the OFDMA communication, part (resource unit (RU)) of the frequency bands that are divided is allocated to the respective STAs so as not to be duplicated and the carrier waves of the respective STAs are orthogonal to each other. Accordingly, the AP is capable of concurrently performing the communication with the multiple STAs.

Although the communication apparatuses 101 to 104 are described to conform to the IEEE 802.11be standard, the communication apparatuses 101 to 104 may conform to a legacy standard, which is a standard previous to the IEEE 802.11be standard. Specifically, the communication apparatuses 101 to 104 may conform to at least one of IEEE 802.11a/b/g/n/ac/ax standards. Alternatively, the communication apparatuses 101 to 104 may conform to a standard subsequent to the IEEE 802.11be.

The communication apparatuses 101 to 104 may conform to another communication standard, such as Bluetooth (registered trademark), NFC, UWB, ZigBee, or MBOA, in addition to the IEEE 802.11 series standard.

UWB is an abbreviation of Ultra Wide Band and MBOA is an abbreviation of Multi-Band OFDM Alliance. NFC is an abbreviation of Near Field Communication. The UWB includes wireless Universal Serial Bus (USB), Wireless 1394, WiNET, and so on. The communication apparatuses 101 to 104 may conform to a communication standard of wired communication, such as a wired LAN.

Although a wireless LAN router, a personal computer (PC), and so on are listed as specific examples of the communication apparatuses 101 to 104, the communication apparatuses 101 to 104 are not limited to these. The communication apparatuses 101 to 104 may be information processing apparatuses, such as wireless chips, capable of performing the wireless communication conforming to the IEEE 802.11be standard. Although a camera, a tablet, a smartphone, a PC, a mobile phone, a video camera, and so on are listed as specific examples of the communication apparatuses 102 to 104, the communication apparatuses 102 to 104 are not limited to these. Although the wireless network in Fig. 1 is composed of the one AP and the three STAs, the number of the APs and the number of the STAs are not limited to the ones in Fig. 1.

The communication apparatus 101, which is the AP, shares and allocates part of acquired TXOP with the communication apparatuses 102 to 104, which are the STAs, by using Triggered TXOP sharing and this technology is called Triggered TXOP sharing. In the Triggered TXOP sharing, by using a Trigger frame, sharing of at least part of the TXOP that is acquired by the AP with the communication apparatuses participating in the network built by the AP is permitted to efficiently perform the communication. The TXOP (transmission opportunity) indicates a period during which, after the AP or the STA acquires an access right to a channel through competition control with EDCA, use of the channel is exclusively permitted. Here, EDCA is an abbreviation of Enhanced Distributed Channel Access. The technology in which sharing of part of the TXOP acquired by the AP with the STA is permitted using the Trigger frame to efficiently perform the communication is referred to as the Triggered TXOP sharing. The AP allocates part of the acquired TXOP to the STA to share the TXOP which the AP has acquired through the Triggered TXOP sharing. The TXOP that is acquired by the AP and that is capable of being shared with the STA for usage is referred to as a TXOP sharing period.

The Triggered TXOP sharing is started upon transmission of a MU-RTS TXS Trigger frame to the STA by the AP. Here, MU-RTS TXS Trigger frame is an abbreviation of Multi User-Request to Send TXOP sharing Trigger frame.

At this time, the AP specifies AID of the STA to which part of the ensured TXOP is allocated to permit the communication in a User Info field in the MU-RTS TXS Trigger frame. In the Triggered TXOP sharing, the MU-RTS TXS Trigger frame in which Trigger Type is set to MU-RTS is used.

The STA to which part of the TXOP acquired by the AP is allocated using the MU-RTS TXS Trigger frame is capable of transmitting data to the AP or another STA during the TXOP sharing period. Whether the communication is performed between the STA and the AP or between the STA and the STA during the TXOP sharing period is capable of being specified in a TXOP sharing mode subfield included in a Common info field in the Trigger frame.

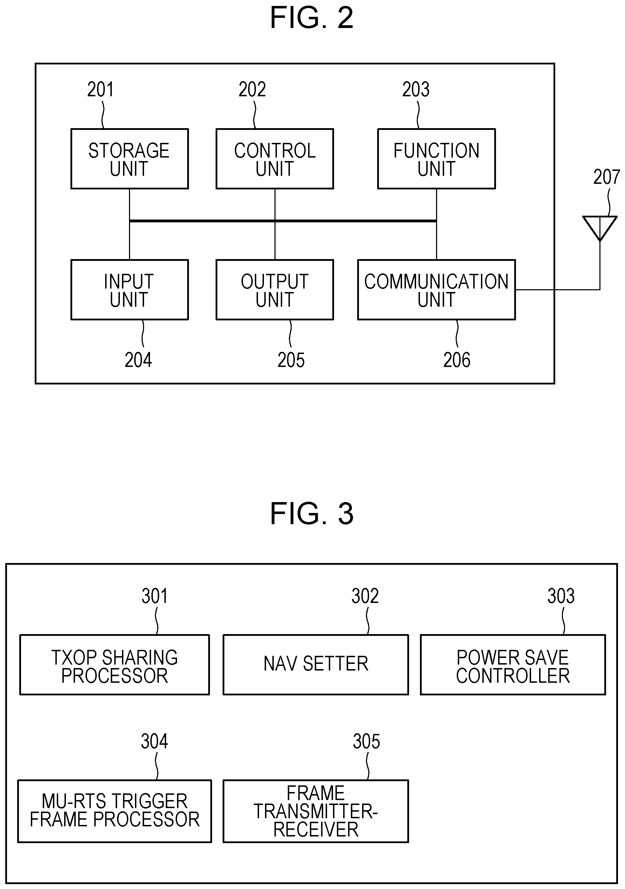

Fig. 2 illustrates an example of the hardware configuration of the communication apparatus 101, which is the AP, in the present embodiment. The communication apparatuses 102 to 104, which are the STAs, may have the same configuration. The communication apparatus 101 includes a storage unit 201, a control unit 202, a function unit 203, an input unit 204, an output unit 205, a communication unit 206, and an antenna 207.

The storage unit 201 is composed of a memory, such as a ROM or a RAM, and stores computer programs for performing various operations described below and a variety information, such as communication parameters for the wireless communication. ROM is an abbreviation of read only memory and RAM is an abbreviation of random access memory. A storage medium, such as a flexible disk, a hard disk, an optical disk, a magneto-optical disk, a compact disk-read only memory (CD-ROM), a compact disk-recordable (CD-R), a magnetic tape, a non-volatile memory card, or a digital versatile disk (DVD) may be used as the storage unit 201, in addition to the memory, such as the ROM or RAM. The storage unit 201 may include multiple memories or the likes.

The control unit 202 is composed of one or more processors, such as a CPU or an MPU, and executes the computer programs stored in the storage unit 201 to control the entire communication apparatus 104. CPU is an abbreviation of central processing unit and MPU is an abbreviation of micro processing unit. The control unit 202 may control the entire communication apparatus 101 in cooperation with the computer programs stored in the storage unit 201 and an operating system (OS).

In addition, the control unit 202 generates data and signals that are transmitted in communication with another communication apparatus. The control unit 202 may include multiple processors, such as a multi-core, and may control the entire communication apparatus 101 with the multiple processors. Furthermore, the control unit 202 controls the function unit 203 to perform certain processes, such as the wireless communication, imaging, printing, and projection. The function unit 203 is hardware used by the communication apparatus 101 to perform the certain processes.

The input unit 204 accepts various operations from the user. The output unit 205 performs various outputs to the user via a monitor screen and/or a speaker. The outputs from the output unit 205 may be display on the monitor screen, audio output from the speaker, or vibration output, and the like. The input unit 204 and the output unit 205 may be realized by one module, like a touch panel. The input unit 204 and the output unit 205 may be integrated with the communication apparatus 101 or may be separated from the communication apparatus 101.

The communication unit 206 controls the wireless communication conforming to the IEEE 802.11be standard. The communication unit 206 may control the wireless communication conforming to another IEEE 802.11 series standard, in addition to the IEEE 802.11be standard, or may control the wired communication, such as the wired LAN. The communication unit 206 controls the antenna 207 to transmit and receive a radio signal for the wireless communication, which is generated by the control unit 202.

When the communication apparatus 101 conforms to an NFC standard, a Bluetooth standard, and the like, in addition to the IEEE 802.11be standard, the communication unit 206 may control the wireless communication conforming to these standards. When the communication apparatus 101 is capable performing the wireless communication conforming to multiple communication standards, a configuration may be adopted in which the communication units 206 and the antennas 207 conforming to the respective communication standards are separately provided. The communication apparatus 101 performs communication of data, such as image data, document data, and video data, with the communication apparatuses 102 to 104 via the communication unit 206.

Fig. 3 illustrates a block diagram of the functional configuration of the communication apparatuses 102 to 104, which are the STAs, in the present embodiment.

A TXOP sharing processor 301 performs control in a case in which the Triggered TXOP sharing is instructed by the AP. When the TXOP is allocated to the local apparatus, data transmission to the AP or the STA, which is the destination, is performed during the TXOP sharing period. When the TXOP is not allocated to the local apparatus, the STA is capable of making a transition to a Power save state because the possibility of receiving data for the local apparatus is low.

A NAV setter 302 sets a NAV indicating a transmission inhibiting period of the local apparatus based on Duration information included in the MU-RTS TXS Trigger frame received from the AP or a CTS frame received from another STA. NAV is an abbreviation of Network Allocation Vector. Although the NAV is a period during which transmission is inhibited, a frame transmitted from another communication apparatus is capable of being received during the period of the NAV.

A Power save controller 303 controls selection of transition to the Power save state in which the frame is intermittently received for power saving or transition to an Awake state in which the Power save state is cleared.

An MU-RTS TXS Trigger frame processor 304 analyzes and processes the MU-RTS TXS Trigger frame received from the corresponding AP. The STA performs a TXOP sharing process, NAV setting, and power save control in accordance with information in the MU-RTS TXS Trigger frame.

A frame transmitter-receiver 305 performs transmission and reception of a control frame including the MU-RTS TXS Trigger frame, a management frame, and a data frame.

### <First embodiment>

An example is described in the present embodiment, in which the STA that has received the Trigger frame instructing the TXOP sharing makes a transition to the Power save state during the TXOP sharing period when the STA is not permitted to perform communication during the TXOP sharing period.

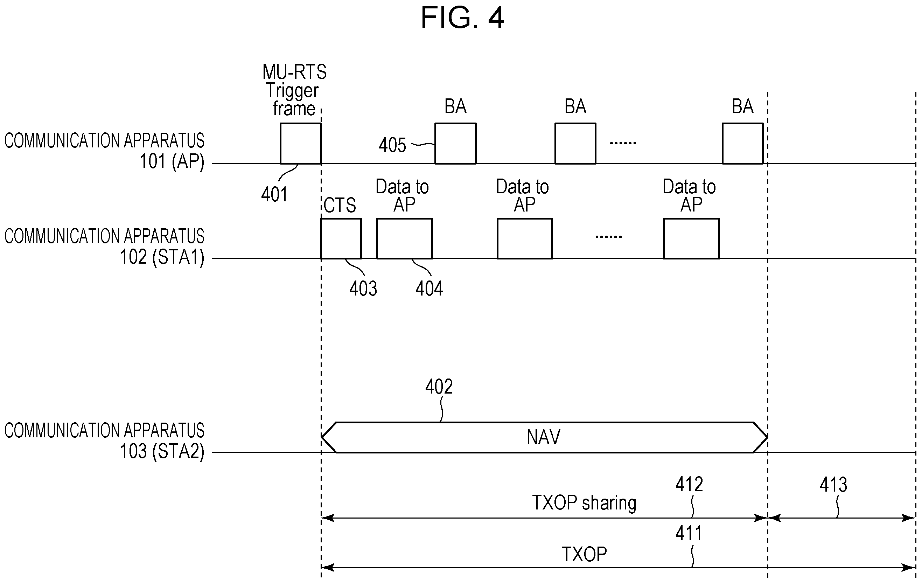

Fig. 4 is a sequence diagram indicating an example of communication through the Triggered TXOP sharing. In the present embodiment, TXOP 411 acquired by the AP is allocated to a STA1 and communication is performed between the STA1 and the AP during a TXOP sharing period 412.

The AP transmits the MU-RTS TXS Trigger frame to all the STAs participating in the network in 401. In the example illustrated in Fig. 4, the AP transmits the MU-RTS TXS Trigger frame to the STA1 and a STA2 and allocates 412, which is part of the TXOP 411 acquired by the AP, to the STA1.

After the STA1 to which the TXOP is allocated makes a response in a CTS frame 403, the STA1 transmits a data frame 404 to the AP. In response to the data frame, the AP transmits a block acknowledgement (ACK) (BA) 405, which is a confirmation response, to the STA1 and subsequently continues exchange of the data frame and the BA during the TXOP sharing period 412, if needed.

In contrast, since the TXOP is not allocated to the STA2, a NAV 402 is set during the TXOP sharing period in the STA2. The NAV 402 indicates the transmission inhibiting period of the frame in the local apparatus. The NAV 402 is set using the Duration information included in the MU-RTS TXS Trigger frame 401 or the CTS frame 403. The STA2 makes a transition to the Power save state during the NAV 402. During a remaining TXOP period 413 after the TXOP sharing period 412 is terminated, the STA2 makes a transition to the Awake state because there is a possibility of receiving the frame from the AP.

As described above, the STA2 to which the TXOP is not allocated makes a transition to the Power save state during the TXOP sharing period shared between the AP and the STA1 to reduce power consumption.

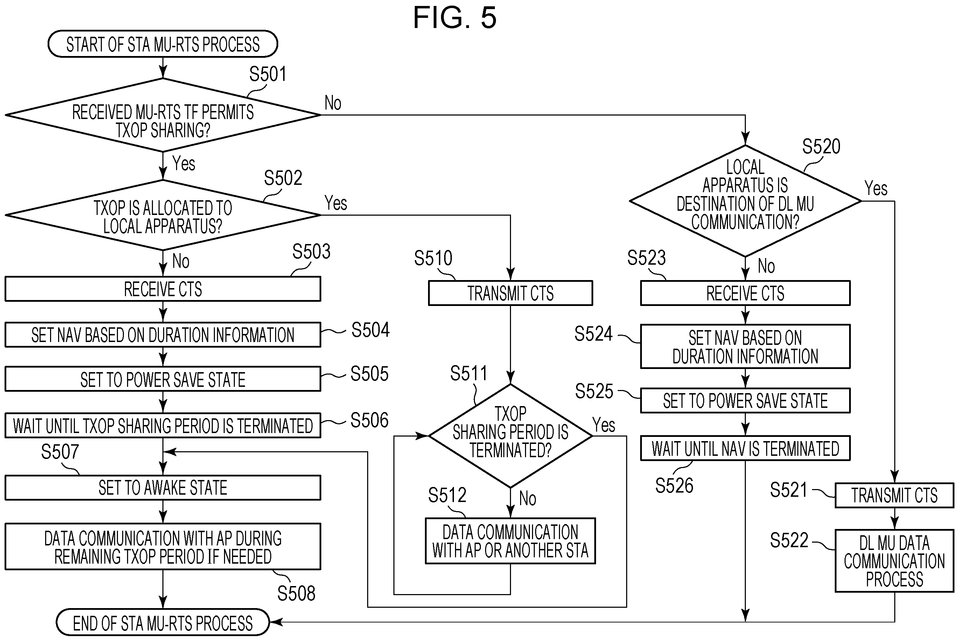

A process of performing the TXOP sharing by the control unit 202 that executes the programs stored in the storage unit 201 of the communication apparatus 102, the communication apparatus 103, or the communication apparatus 104, which is the STA, will now be described with reference to Fig. 5. The flowchart in Fig. 5 is started upon reception of the MU-RTS TXS Trigger frame by the STA.

The STA determines whether the MU-RTS TXS Trigger frame received from the AP permits TXOP sharing communication (S501). If the MU-RTS TXS Trigger frame permits the TXOP sharing communication in S501, the process goes to S502. If the MU-RTS TXS Trigger frame does not permit the TXOP sharing communication in S501, the process goes to S520.

The TXOP sharing communication is capable of being specified in the TXOP sharing mode subfield included in the Common info field in the MU-RTS TXS Trigger frame. The STA, which has received the MU-RTS TXS Trigger frame, performs the determination in S501 based on the information in the subfield.

If it is determined in S501 that the TXOP sharing communication is permitted, it is determined whether at least part of the TXOP acquired by the AP is allocated to the local apparatus (S502). In other words, it is determined whether the local apparatus shares the TXOP acquired by the AP and the communication is permitted in the TXOP sharing period. If it is determined in S502 that at least part of the TXOP acquired by the AP is allocated to the local apparatus, the process goes to S510. If it is determined in S502 that the TXOP acquired by the AP is not allocated, the process goes to S503.

It is determined in S502 that the local apparatus is permitted to share the TXOP acquired by the AP for communication if the AID of the local apparatus is included in the User Info field in the MU-RTS TXS Trigger frame.

If it is determined in S502 that at least part of the TXOP acquired by the AP is not allocated, in other words, if the communication is not permitted in the TXOP acquired by the AP, the CTS frame is received from the STA to which the TXOP is allocated (S503).

Upon reception of the CTS in S503, the NAV is set based on the Duration information included in the MU-RTS TXS Trigger frame or the CTS frame (S504). The STA is in the Power save state during the period of the NAV set in S504 (S505). The STA waits until the TXOP sharing period is terminated (S506). Upon termination of the TXOP sharing period, the STA is in the Awake state (S507) because there is a possibility of receiving the data from the AP during the remaining TXOP period.

If it is determined in S502 that the TXOP is allocated to the local apparatus, the CTS frame is transmitted to the AP as a response to the MU-RTS TXS Trigger frame (S510).

Upon transmission of the CTS frame in S510, it is determined whether the TXOP sharing period of the TXOP allocated to the local apparatus by the APA is terminated (S511). If it is determined in S511 that the TXOP sharing period is terminated, the process goes back to S507. If it is determined in S511 that the TXOP sharing period is not terminated, the process goes to S512. In S512, the data communication with AP or another STA is performed in the TXOP allocated by the AP.

If it is determined in S501 that the MU-RTS TXS Trigger frame received from the AP does not permit the TXOP sharing communication, the STA determines whether the local apparatus is the destination of DL MU communication (S520). Here, DL MU is an abbreviation of Down Link Multi User. If it is determined in S520 that the local apparatus is the destination of the DL MU communication, the process goes to S521. If it is determined in S520 that the local apparatus is not the destination of the DL MU communication, the process goes to S523.

If it is determined in S520 that the local apparatus is the destination of the DL MU communication, the CTS frame is transmitted as a response to the MU-RTS TXS Trigger frame (S521). The DL MU data communication with the AP is performed (S522). If it is determined in S520 that the local apparatus is not the destination of the DL MU communication, the CTS frame from the STA, which is the destination of the DL MU communication, is received (S523).

The NAV is set based on the Duration information included in the MU-RTS TXS Trigger frame received in S501 or the CTS frame received in S523 (S524). The STA is in the Power save state in the period of the NAV set in S524 (S525). The STA waits until the NAV is terminated (S526). Then, the flowchart in Fig. 5 is terminated.

According to the present embodiment, the STA that is not permitted to perform communication during the TXOP sharing period is capable of making a transition to the Power save state during the TXOP sharing period. Making a transition from the Power save state to the Awake state when the TXOP sharing period is terminated enables the STA to receive the frame transmitted from another apparatus while suppressing the power consumption.

### <Second embodiment>

The example is described in the first embodiment, in which the STA that is not permitted to perform communication during the TXOP sharing period makes a transition to the Power save state during the TXOP sharing period. An example is described in the present embodiment, in which the STA that is not permitted to perform communication during the TXOP sharing period makes a transition to the Power save state during the TXOP sharing period if the transition to the Power save state is instructed in the Trigger frame.

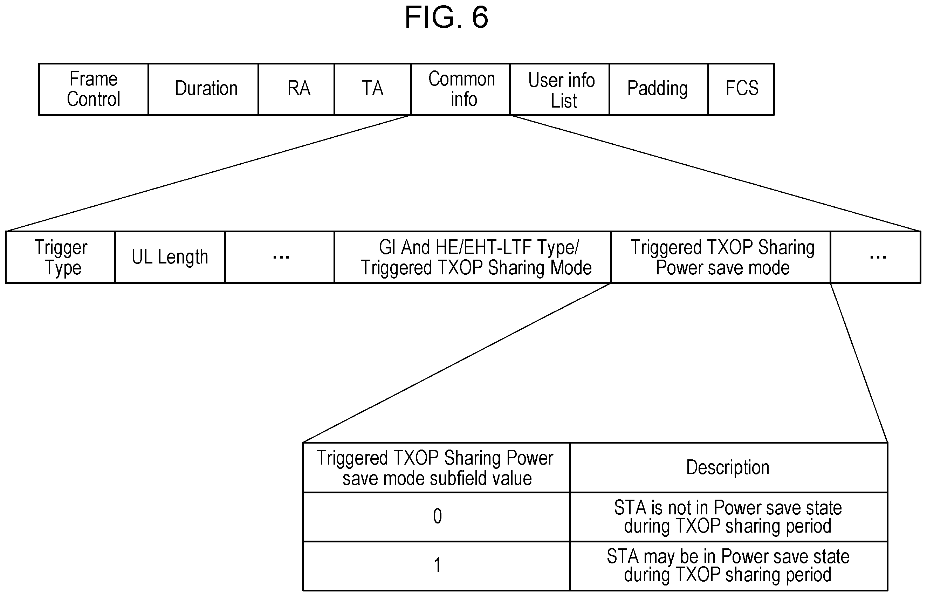

Fig. 6 illustrates an example of the frame format of an enhanced Trigger frame in the present embodiment.

The enhanced Trigger frame is composed of a Frame Control field, a Duration field, an RA field, a TA field, a Common info field, a User info List field, a Padding field, and an FCS field.

The Common info includes Trigger Type, UL Length, GI And HE/EHT-LTF Type/Triggered TXOP Sharing Mode, and Triggered TXOP Sharing Power save mode.

The Trigger Type field indicates the type of the Trigger frame. When the TXOP Sharing is performed, the MU-RTS TXS Trigger frame is specified in the Trigger Type field.

The GI And HE/EHT-LTF Type/Triggered TXOP Sharing Mode field includes information indicating whether the TXOP sharing communication is to be performed.

The Triggered TXOP Sharing Power save mode field is a field specifying whether the communication apparatus that is not permitted to perform communication during the TXOP sharing period operates in the Power save state during the TXOP sharing period. When zero is stored in the Triggered TXOP Sharing Power save mode field, it is indicated that the communication apparatus that is not permitted to perform communication during the TXOP sharing period does not make a transition to the Power save state during the TXOP sharing period. When one is stored in the Triggered TXOP Sharing Power save mode field, it is indicated that the communication apparatus that is not permitted to perform communication during the TXOP sharing period may make a transition to the Power save state during the TXOP sharing period.

The names of the fields and the subfields are only examples and the fields and the subfields may have other names. The correspondence between the values and the states may be varied as long as the values and the states indicate the transition to the Power save state. Although the example is described in the present embodiment, in which the Trigger Type field, the UL Length field, the GI And HE/EHT-LTF Type/Triggered TXOP Sharing Mode field, and the Triggered TXOP Sharing Power save mode field are included in the Common info field in the MU-RTS TXS Trigger frame, the above fields may be included in the User Info field.

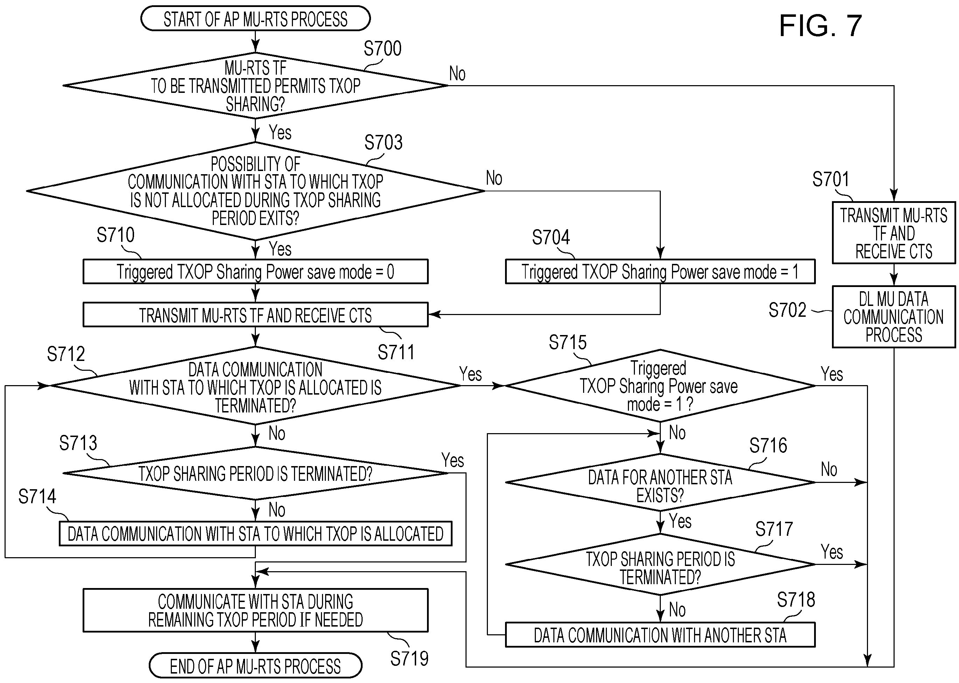

A process of performing the TXOP sharing by the control unit 202 that executes the programs stored in the storage unit 201 of the communication apparatus 101, which is the AP, will now be described with reference to Fig. 7. An example is described in the present embodiment, in which the subfields defined in Fig. 6 are included in the MU-RTS TXS Trigger frame. The flowchart in Fig. 7 is started upon start of the DL MU communication or the communication of the Triggered TXOP sharing by the AP.

The AP determines whether the MU-RTS TXS Trigger frame to be transmitted specifies the TXOP sharing communication (S700). If it is determined in S700 that the MU-RTS TXS Trigger frame permits the TXOP sharing communication, the process goes to S703. If it is determined in S700 that the MU-RTS TXS Trigger frame does not permit the TXOP sharing communication, the process goes to S701.

If it is determined in S700 that the MU-RTS TXS Trigger frame does not permit the TXOP sharing communication, the AP transmits the MU-RTS TXS Trigger frame and receives the CTS frame from the STA that performs the DL MU communication (S701). Upon reception of the CTS frame in S701, in S702, the DL MU data communication process is performed. After the communication with the STA is performed during the remaining TXOP period, if needed, in S702, the flowchart in Fig. 7 is terminated.

If it is determined in S700 that the MU-RTS TXS Trigger frame permits the TXOP sharing communication, it is determined whether the possibility of communication of the AP with the STA to which the TXOP is not allocated exits during the TXOP sharing period (S703). The case in which the possibility of communication of the AP with the STA to which the TXOP is not allocated exits corresponds to a case in which the AP intends to communicate with the STA to which the TXOP is not allocated, for example, if the TXOP sharing period terminates earlier than supposed.

If it is determined in S703 that the possibility of communication of the AP with the STA to which the TXOP is not allocated exits, the Triggered TXOP Sharing Power save mode field is set to zero (S710). The MU-RTS TXS Trigger frame in which the Triggered TXOP Sharing Power save mode field is set to zero is transmitted (S711).

If it is determined in S703 that the possibility of communication of the AP with the STA to which the TXOP is not allocated does not exit during the TXOP sharing period, the Triggered TXOP Sharing Power save mode field is set to one (S704). The MU-RTS TXS Trigger frame in which the Triggered TXOP Sharing Power save mode field is set to one is transmitted (S711).

After confirming that the CTS frame, which is a response frame for the transmitted MU-RTS TXS Trigger frame, is received (S711), it is determined whether the data communication with the STA to which the TXOP is allocated is terminated (S712). If it is determined in S712 that the data communication with the STA to which the TXOP is allocated is terminated, the process goes to S715. If it is determined in S712 that the data communication with the STA to which the TXOP is allocated is not terminated, the process goes to S713. For example, if the AP is not capable of receiving the data from the STA to which the TXOP is allocated for a certain period, it is determined in S712 that the data communication is terminated.

If it is determined in S712 that the data communication with the STA to which the TXOP is allocated is terminated, it is determined whether the TXOP sharing period is terminated (S713). If it is determined in S713 that the data communication with the STA to which the TXOP is allocated is terminated, the communication with another STA is performed during the remaining TXOP period, if needed. If it is determined in S713 that the TXOP sharing period is not terminated, in S714, the data communication with the STA to which the TXOP is allocated is performed.

If it is determined in S713 that the data communication with the STA to which the TXOP is allocated is terminated, it is determined whether the Triggered TXOP Sharing Power save mode field is set to one (S715). If it is determined in S715 that the field is set to one, that is, if it is specified that a transition may be made to the Power save state during the TXOP sharing period, the AP operates in the following manner.

Specifically, when it is determined that the field is set to one, since the STA has made a transition to the Power save state even if the data for the STA to which the TXOP is not allocated exists, no data is transmitted and the process goes to S719.

If it is determined in S715 that the field is set to zero, that is, if it is specified that a transition is not made to the Power save state during the TXOP sharing period, it is determined whether the data for another STA exists (S716). If it is determined in S716 that the data for another STA exists, the process goes to S717. If it is determined in S716 that the data for another STA does not exist, the process goes to S719. Then, the flowchart in Fig. 7 is terminated.

If it is determined in S716 that the data for another STA exists, it is determined whether the TXOP sharing period is terminated (S717). If it is determined that the TXOP sharing period is not terminated, in S718, the data communication with another STA is performed.

If it is determined in S717 that the TXOP sharing period is terminated, the process goes to S719. Then, the flowchart in Fig. 7 is terminated.

According to the present embodiment, the STA that is not permitted to perform communication during the TXOP sharing period is capable of making a transition to the Power save state during the TXOP sharing period if the STA is instructed to make a transition to the Power save state during the TXOP sharing period. When the TXOP sharing period is terminated, making a transition from the Power save state to the Awake state enables the STA to receive the frame transmitted from another apparatus while suppressing the power consumption.

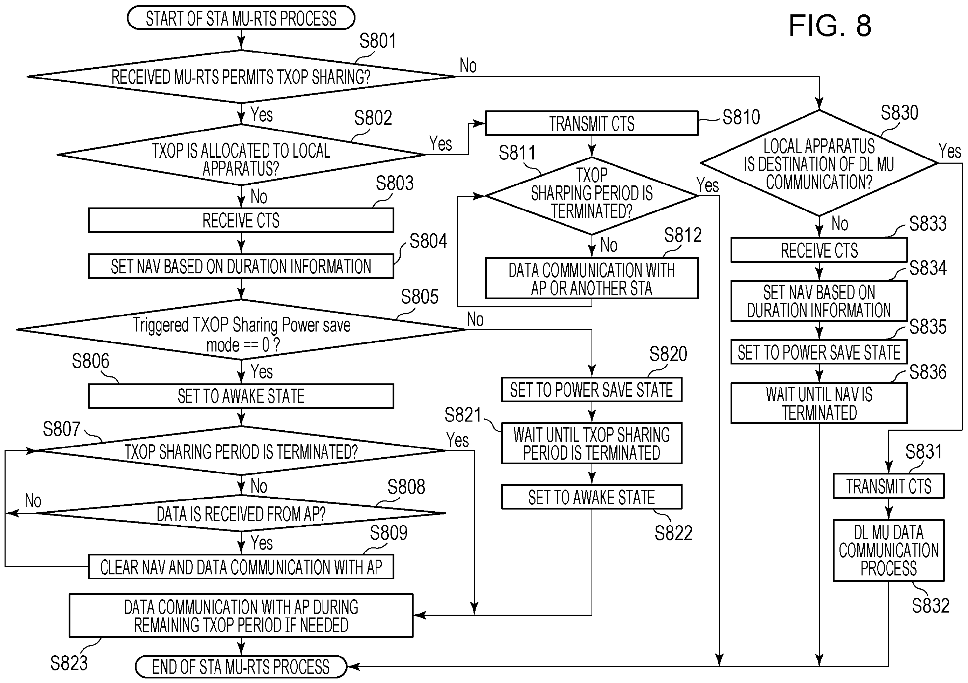

A process of performing the TXOP sharing by the control unit 202 that executes the programs stored in the storage unit 201 of the communication apparatus 102, the communication apparatus 103, or the communication apparatus 104, which is the STA, will now be described with reference to Fig. 8. The flowchart in Fig. 8 is started upon reception of the MU-RTS TXS Trigger frame by the STA.

The STA determines whether the MU-RTS TXS Trigger frame received from the AP permits the TXOP sharing communication (S801). If it is determined in S801 that the MU-RTS TXS Trigger frame permits the TXOP sharing communication, the process goes to S802. If it is determined in S801 that the MU-RTS TXS Trigger frame does not permit the TXOP sharing communication, the process goes to S830. Whether the TXOP sharing communication is permitted is capable of being specified in the TXOP sharing mode subfield included in the Common info field in the MU-RTS TXS Trigger frame.

If it is determined in S801 that the MU-RTS TXS Trigger frame permits the TXOP sharing communication, it is determined whether the TXOP acquired by the AP is allocated to the local apparatus (S802). If it is determined in S802 that the TXOP acquired by the AP is allocated to the local apparatus, the process goes to S810. If it is determined in S802 that the TXOP acquired by the AP is not allocated to the local apparatus, the process goes to S803.

If it is determined in S802 that the TXOP acquired by the AP is not allocated to the local apparatus, the CTS frame from the STA to which the TXOP is allocated is received (S803). The NAV is set based on the Duration information included in the MU-RTS TXS Trigger frame or the CTS frame that is received (S804).

It is determined whether the Triggered TXOP Sharing Power save mode field included in the MU-RTS TXS Trigger frame is set to zero (S805). Setting the Triggered TXOP Sharing Power save mode field to zero means that a transition is not made to the Power save state during the TXOP sharing period.

If it is determined in S805 that the field is set to zero, the process goes to S806. In S806, the STA is in the Awake state. If it is determined in S805 that the field is not set to zero, the process goes to S820. In S820, the STA makes a transition to the Power save state.

After the STA is in the Awake state in S806, it is determined whether the TXOP sharing period is terminated (S807). If it is determined that the TXOP sharing period is terminated, the process goes to S823. If it is determined that the TXOP sharing period is not terminated, the process goes to S808.

If it is determined in S807 that the TXOP sharing period is not terminated, it is determined whether the data frame is received from the AP during the TXOP sharing period (S808). If it is determined in S808 that the data frame is not received, the process goes back to S807. If it is determined in S808 that the data frame is received, in Step S809, the NAV that is set is cleared and the data communication with the AP is performed (S809). In S823, the data communication with the AP is performed if the data is received from the AP during the remaining TXOP period. After the data communication of the STA with the AP is terminated, the flowchart in Fig. 8 is terminated.

If it is determined in S805 that the set value is not zero, in S820, the STA makes a transition to the Power save state. The STA waits until the TXOP sharing period is terminated (S821). After the TXOP sharing period is terminated, the STA makes a transition to the Awake state (S822). In S823, the data communication with the AP is performed if the data is received from the AP during the remaining TXOP period.

If the TXOP is allocated to the local apparatus, in S810, the STA transmits the CTS frame as a response to the AP. In S811, it is determined whether the TXOP sharing period is terminated. If it is determined that the TXOP sharing period is terminated, the process goes to S823. If it is determined that the TXOP sharing period is not terminated, the process goes to S812. In S812, the STA performs the data communication with the AP or another STA at the acquired TXOP.

If it is determined in S811 that the TXOP sharing period is terminated, in S823, the data communication with the AP is performed if the data is received from the AP during the remaining TXOP period. Then, the flowchart in Fig. 8 is terminated.

If the received MU-RTS TXS Trigger frame does not instruct the TXOP sharing communication, it is determined whether the local apparatus is the destination of the Down Link Multi User (DL MU) communication (S830). If it is determined in S830 that the local apparatus is the destination of the DL MU communication, the process goes to S831. If it is determined in S830 that the local apparatus is not the destination of the DL MU communication, the process goes to S833.

If it is determined in S830 that the local apparatus is the destination of the DL MU communication, the CTS frame is transmitted to the AP as the response frame for the MU-RTS TXS Trigger frame (S831). The DL MU data communication with the AP is performed (S832).

If it is determined in S830 that the local apparatus is not the destination of the DL MU communication, the CTS frame is received from the STA that is the destination of the DL MU communication (S833).

In S834, the NAV is set based on the Duration information included in the MU-RTS TXS Trigger frame or the CTS frame.

Since the STA does not receive the data in the DL MU communication, in S835, the STA makes a transition to the Power save state. In S836, the STA waits until the NAV is terminated. Then, the flowchart in Fig. 8 is terminated.

According to the present embodiment, the STA that is not permitted to perform communication during the TXOP sharing period makes a transition to the Power save state during the TXOP sharing period if the transition to the Power save state is instructed in the Trigger frame.

The STA that is not permitted to perform communication during the TXOP sharing period makes a transition to the Power save state during the TXOP sharing period to reduce the power consumption.

The STA that is not permitted to perform communication during the TXOP sharing period may make a transition to the Power save state during the TXOP sharing period if the STA is instructed to perform the TXOP sharing with the STA-STA communication being specified. If the TXOP sharing period is not terminated when the TXOP sharing is being performed with the STA-STA communication being specified, there is a possibility that the AP does not detect the remaining of the TXOP sharing period. Accordingly, since the AP may not perform the transmission during the TXOP sharing period, the STA that is not permitted to perform communication during the TXOP sharing period may make a transition to the Power save state during the TXOP sharing period. If the TXOP sharing period is terminated and the TXOP period acquired by the AP continues, the STA makes a transition to the Awake state because there is a possibility that the frame is received from the AP.

A recording medium on which program code of software realizing the above functions is recorded may be supplied to a system or an apparatus and the computer (the CPU or the MPU) in the system or the apparatus may read out and execute the program code stored in the recording medium. In this case, the program code itself read out from the recording medium realizes the functions of the above embodiments and the recording medium on which the program code is stored composes the apparatus described above.

For example, a flexible disk, a hard disk, an optical disk, a magneto-optical disk, a CD-ROM, a CD-R, a magnetic tape, a non-volatile memory card, a ROM, or a DVD may be used as the recording medium for supplying the program code.

In addition to the realization of the above functions by the computer that executes the program code that is read out, part or all of the actual processes may be performed by the OS operating on the computer based on instructions of the program code to realize the above functions. OS is an abbreviation of operating system.

In addition, the program code read out from the recording medium is written to a memory in a function enhancement board loaded in the computer or a function enhancement unit connected to the computer. The CPU in the function enhancement board or the function enhancement unit may perform part or all of the actual processes based on the instructions of the program code to realize the above functions.

The present invention is capable of being realized also by a process in which programs realizing one or more functions of the above embodiments are supplied to a system or an apparatus via a network or a recording medium and one or more processors in the computer of the system or the apparatus read out and execute the programs. The present invention is capable of being realized by a circuit (for example, an application specific integrated circuit (ASIC)) realizing the one or more functions.

The invention is not restricted by the above embodiments and various change and modifications are available without departing from the spirit and the scope of the invention. Accordingly, the claims are appended in order to publicize the scope of the invention.

This application claims the benefit of Japanese Patent Application No. 2022-052633 filed March 28, 2022, which is hereby incorporated by reference herein in its entirety.

## Claims

1. A communication apparatus participating in a wireless network built by another first communication apparatus, the communication apparatus comprising:
first receiving means receiving a Trigger frame from the other first communication apparatus in an Awake state of the communication apparatus, the Trigger frame permitting sharing of a first period, which is at least part of transmission opportunity (TXOP) acquired by the other first communication apparatus, with at least one communication apparatus participating in the wireless network for communication and conforming to IEEE 802.11 series standard; and
control means causing the communication apparatus to make a transition from the Awake state to a Power save state during the first period if the communication apparatus is not permitted to share the first period in the Trigger frame received by the first receiving means.

2. The communication apparatus according to claim 1, comprising:
a second receiving means receiving a response frame for the Trigger frame from another second communication apparatus sharing the first period in the Trigger frame; and
setting means setting a second period during which transmission of a frame by the communication apparatus is inhibited based on information in the Trigger frame received by the first receiving means or the response frame received by the second receiving means if the communication apparatus is not permitted to share the first period in the Trigger frame received by the first receiving means.

3. The communication apparatus according to claim 2,
wherein the communication apparatus makes a transition to the Power save state during the second period set by the setting means.

4. The communication apparatus according to claim 2 or 3,
wherein the second period is Network Allocation Vector (NAV) .

5. The communication apparatus according to any of claims 1 to 4,
wherein the control means causes the communication apparatus to make a transition to the Power save state during the first period if the other first communication apparatus is not permitted to share the first period and the other second communication apparatus is permitted to share the first period in the Trigger frame received by the first receiving means.

6. The communication apparatus according to any of claims 1 to 5,
wherein information indicating whether the communication apparatus that is not permitted to share the first period makes a transition to the Power save state is included in the Trigger frame.

7. The communication apparatus according to any of claims 1 to 6,
wherein the communication apparatus makes a transition from the Power save state to the Awake state if the TXOP continues after the first period is terminated.

8. The communication apparatus according to any of claims 1 to 7,
wherein a frame is intermittently received in the Power save state.

9. A communication apparatus playing a role of building a wireless network, the communication apparatus comprising:
transmitting means transmitting a Trigger frame to another communication apparatus participating in the wireless network built by the communication apparatus, the Trigger frame permitting sharing of a first period, which is at least part of transmission opportunity (TXOP) acquired by the communication apparatus, with at least one communication apparatus participating in the wireless network for communication and conforming to IEEE 802.11 series standard,
wherein information indicating whether a communication apparatus that is not permitted to share the first period in the Trigger frame makes a transition to a Power save state is included in the Trigger frame.

10. The communication apparatus according to any of claims 1 to 8,
wherein the Trigger frame is Multi User-Request to Send TXOP sharing Trigger frame (MU-RTS TXS Trigger frame).

11. A communication method for a communication apparatus participating in a wireless network built by another first communication apparatus, the communication method comprising:
a first receiving step of receiving a Trigger frame from the other first communication apparatus in an Awake state of the communication apparatus, the Trigger frame permitting sharing of a first period, which is at least part of transmission opportunity (TXOP) acquired by the other first communication apparatus, with at least one communication apparatus participating in the wireless network for communication and conforming to IEEE 802.11 series standard; and
a control step of causing the communication apparatus to make a transition from the Awake state to a Power save state during the first period if the communication apparatus is not permitted to share the first period in the Trigger frame received in the first receiving step.

12. A communication method for a communication apparatus playing a role of building a wireless network, the communication method comprising:
a transmitting step of transmitting a Trigger frame to another communication apparatus participating in the wireless network built by the communication apparatus, the Trigger frame permitting sharing of a first period, which is at least part of transmission opportunity (TXOP) acquired by the communication apparatus, with at least one communication apparatus participating in the wireless network for communication and conforming to IEEE 802.11 series standard,
wherein information indicating whether a communication apparatus that is not permitted to share the first period in the Trigger frame makes a transition to a Power save state is included in the Trigger frame.

13. A program causing a computer to function as each means in the communication apparatus described in any of claims 1 to 10.
